(19) Europäisches Patentamt
European Patent Office
Office européen des brevets

(11) Veröffentlichungsnummer: **0 403 922 B1**

(12) **EUROPÄISCHE PATENTSCHRIFT**

(45) Veröffentlichungstag der Patentschrift: **12.01.94**

(51) Int. Cl.[5]: **C09D 157/10**, C09D 163/00, //(C09D163/00,133:06), (C09D157/10,163:00)

(21) Anmeldenummer: **90111040.3**

(22) Anmeldetag: **12.06.90**

(54) **Bindemittelkombinationen und ihre Verwendung in Beschichtungsmitteln oder Dichtmassen.**

(30) Priorität: **22.06.89 DE 3920413**

(43) Veröffentlichungstag der Anmeldung:
**27.12.90 Patentblatt 90/52**

(45) Bekanntmachung des Hinweises auf die Patenterteilung:
**12.01.94 Patentblatt 94/02**

(84) Benannte Vertragsstaaten:
**AT BE CH DE ES FR GB IT LI NL SE**

(56) Entgegenhaltungen:
**EP-A- 0 237 951**

(73) Patentinhaber: **BAYER AG**

**D-51368 Leverkusen(DE)**

(72) Erfinder: **Wamprecht, Christian, Dr.**
**Regattastrasse 20**
**D-4040 Neuss 22(DE)**
Erfinder: **Blum, Harald, Dr.**
**Auf dem Westkamp 1**
**D-4175 Wachtendonk(DE)**
Erfinder: **Meixner, Jürgen, Dr.**
**Josef-Brocker-Dyk 56**
**D-4150 Krefeld(DE)**
Erfinder: **Pedain, Josef, Dr.**
**Haferkamp 6**
**D-5000 Köln 80(DE)**

EP 0 403 922 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.9/3.3.3)

## Beschreibung

Die vorliegende Erfindung betrifft neue Bindemittelkombinationen, bestehend im wesentlichen aus Anhydrid- und Hydroxylgruppen enthaltenden Copolymerisaten, sowi organischen Verbindungen, welche mindestens zwei Epoxid-gruppen pro Molekül aufweisen und ihre Verwendung als Bindemittel in Beschichtungsmitteln und Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmittel ist bereits bekannt.

Die FR-A-2 392 092 beschreibt Beschichtungskompositionen, bestehend aus hydroxylfunktionellen Polymeren und einem Esteranhydrid mit mindestens zwei Anhydridgruppen pro Molekül, wobei das Esteranhydrid ein Oligomer von Trimellithsäureanhydrid ist. Nachteilig ist dabei die sehr schlechte Löslichkeit der Anhydridkomponente in lacküblichen Lösungsmitteln, sowie die Unverträglichkeit mit den hydroxylfunktionellen Polymeren.

Die EP-A-48 128 beschreibt Beschichtungskompositionen, bestehend aus einer Hydroxylkomponente mit mindestens zwei Hydroxylgruppen pro Molekül, einer Anhydridkomponente mit mindestens zwei Anydridgruppen pro Molekül und gegebenenfalls einer als Katalysator wirkenden Aminkomponente. Dabei können die katalytisch wirkenden Aminogruppen auch schon in der Hydroxylkomponente enthalten sein. Die beschriebene Verwendung von monomeren Aminoalkoholen wie z.B. Triethanolamin als Vernetzungsreagentien wirkt sich dabei sehr nachteilig auf dis Lösungsmittelfestigkeit der fertigen Lacke aus, wenn eine ausreichend lange Standzeit erreicht werden muß.

Eine ausreichend lange Standzeit von mehreren Stunden kann hierbei nämlich nur auf Kosten einer geringen Vernetzungsdichte erzielt werden, wobei Lackfilme resultieren, die nicht lösungsmittelbeständig sind. Auch bei Verwendung von höhermolekularen Polyolen, wobei es zu Unverträglichkeiten mit dem anhydridgruppenhaltigen Copolymerisat kommen kann, ist es kaum möglich, eine für die Praxis ausreichend lange Standzeit der Systeme zu erzielen.

Sowohl bei Raumtemperatur härtende als auch Einbrennbindemittel auf Basis von Carboxylgruppen und Epoxidgruppen enthaltenden Bindemittelkomponenten sind ebenfalls bereits bekannt.

Die DE-A-2 635 177 und DE-A-2 728 459 beschreiben lösungsmittelarme Einbrennlacke bestehend aus

a) einem carboxylgruppenhaltigen Acrylatharz,
b) einem Epoxidharz mit mindestens zwei Epoxidgruppen pro Molekül und
c) einem Lösungsmittelgemisch.

Nachteilig wirkt sich bei diesen Systemen die schleichende Vorreaktion zwischen freien Carboxyl- und freien Epoxidgruppen aus, was zu einer unzureichenden Standzeit führen kann.

Die EP-A-123 793 und EP-A-156 210 beschreiben bei Raumtemperatur härtbare Harzkompositionen für Beschichtungen und Klebstoffe, bestehend aus einer Komponente a), die Carboxyl- und tertiäre Aminogruppen enthält, und einer Komponente b), die Epoxidgruppen aufweist. Die Komponente a) wird dadurch erhalten, daß ein Copolymerisat, das Carbonsäure- und Carbonsäureanhydridgruppen enthält, mit einer Verbindung zur Reaktion gebracht wird, die eine tertiäre Aminogruppe und eine aktive Wasserstoffatome aufweisende Gruppe enthält, die mit den Anhydridgruppen reagieren kann. Die auf diese Weise aus den Anhydridgruppen erzeugten Carbonsäuregruppen stehen zusammen mit den direkt in das Polymer eingeführten Carbonsäuregruppen als gegenüber den Epoxidgruppen der Komponente b) reaktionsfähige Gruppierungen zur Verfügung. Solche Systeme haben jedoch den Nachteil, daß es zu Unverträglichkeiten zwischen den beiden Komponenten a) und b) kommen kann, was unzulängliche optische Eigenschaften der Lackfilme zur Folge hat.

Ein weiterer Nachteil besteht in der Tatsache, daß man mit diesen Systemen erst nach 4 Tagen einigermaßen lösungsmittelbeständige Lackfilme erhält.

Die EP-A-134 691 beschreibt bei Raumtemperatur oder wenig erhöhter Temperatur härtbare Kompositionen, bestehend aus

a) einer Komponente mit mindestens zwei Hydroxylgruppen pro Molekül,
b) einer Komponente mit mindestens zwei Anhydridgruppen pro Molekül und
c) einer Komponente mit mindestens zwei Epoxidgruppen pro Molekül.

Solche Systeme sind jedoch mit dem Nachteil behaftet, daß drei Bindemittelkomponenten benötigt werden, die miteinander verträglich sein müssen. Dieser Umstand schränkt die Variationsmöglichkeiten unter den Bindemittelkomponenten wegen Verträglichkeitsproblemen erheblich ein.

Es war die der Erfindung zugrundeliegende Aufgabe, neue, hochwertige Bindemittelkombinationen auf Basis einer zwischen cyclischen Carbonsäureanhydrid-, Hydroxyl- und Epoxidgruppen im Sinne von

Additionsreaktionen ablaufenden Vernetzungsreaktionen zur Verfügung zu stellen, die eine für Lackanwendungen ausreichende Standzeit aufweisen und die je nach Anwendungsbereich bereits bei Raumtemperatur oder aber bei erhöhter Temperatur zu klaren, farblosen, vergilbungsbeständigen und lösungsmittelfesten Überzügen ausgehärtet werden können, und die im übrigen nicht mit den genannten Nachteilen der Systeme gemäß Stand der Technik behaftet sind.

Diese Aufgabe konnte durch die Bereitstellung der nachstehend näher beschriebenen Bindemittelkombinationen gelöst werden.

In den erfindungsgemäßen Bindemittelkombinationen liegt eine Komponente A), die sowohl freie intramolekulare Carbonsäureanhydridgruppen als auch freie Hydroxylgruppen chemisch gebunden aufweist, und eine Komponente B) vor, die mindestens zwei Epoxidgruppen pro Molekül enthält. Derartige Bindemittelkombinationen sind bisher noch nicht beschrieben worden. Der besondere Vorteil solcher Systeme liegt in der Tatsache, daß in der Komponente A) zunächst noch keine freien Carboxylgruppen, welche zur Vernetzung mit den Epoxidgruppen der Komponente B) erforderlich sind, vorliegen, sondern daß diese Carboxylgruppen erst aus der Reaktion der Carbonsäureanhydrid- mit den Hydroxylgruppen durch Einwirkung von Katalysatoren oder Hitze gebildet werden. Somit weisen diese Bindemittelkombinationen eine erheblich bessere Lagerstabilität bei Raumtemperatur auf, als vergleichbare Systeme des Standes der Technik, welche freie Carboxylgruppen enthalten. Ein weiterer Vorteil der erfindungsgemäßen Bindemittelkombinationen besteht darin, daß es sich bei der Härtungsreaktion um einen sogenannten "double-cure"-Mechanismus handelt, das heißt, zunächst reagieren die Hydroxylgruppen der Komponente A) unter Hitze- bzw. Katalysatoreinwirkung mit den Anhydridgruppen der Komponente A) unter Anhydridringöffnung und Ausbildung von Carboxylgruppen. Diese Reaktion stellt schon einen Vernetzungsvorgang dar. Darüber hinaus können jedoch die neu entstandenen Carboxylgruppen mit den Epoxidgruppen der Komponente B) reagieren, was eine zusätzliche Vernetzung zur Folge hat.

Aufgrund der erzielbaren hohen Vernetzungsdichten resultieren aus den erfindungsgemäßen Bindemittelkombinationen Beschichtungen, die ein sehr hohes Niveau bezüglich Chemikalien- und Lösungsmittelbeständigkeit aufweisen.

Gegenstand der Erfindung sind Bindemittelkombinationen enthaltend

A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches sowohl

(i) 0,2 bis 6,0 Gew.-% an freien Hydroxylgruppen als auch

(ii) 1 bis 30 Gew.-% an Carbonsäureanhydridgruppen (berechnet als $C_4H_2O_3$)

chemisch gebunden enthält, und

B) 1 bis 70 Gew.-Teile einer Epoxid-Komponente, bestehend aus mindestens einem organischen Polyepoxid mit mindestens zwei Epoxidgruppen pro Molekül

mit der Maßgabe, daß auf jede Anhydridgruppe der Komponente A) 0,2 bis 8 Epoxidgruppen der Komponente B) entfallen.

Gegenstand der Erfindung ist auch die Verwendung dieser Bindemittelkombinationen als Bindemittel für hitzehärtbare Beschichtungsmittel oder Dichtmassen oder, in Gegenwart von Katalysatoren, als Bindemittel in bei Raumtemperatur härtbaren Beschichtungsmitteln oder Dichtmassen.

Die Copolymerisatkomponente A) besteht aus mindestens einem Copolymerisat, welches sowohl chemisch eingebaute, freie Hydroxylgruppen in einer Menge von 0,2 bis 6,0 Gew.-%, vorzugsweise 0,4 bis 4,0 Gew.-%, als auch chemisch eingebaute intramolekulare, cyclische Carbonsäureanhydridgruppen der Formel

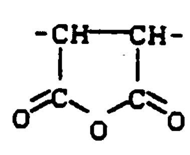

in einer Menge von 1 bis 30 Gew.-%, vorzugsweise 5 bis 25 Gew.-%, enthält. Die Copolymerisate weisen ein, nach der Methode der Gelpermeationschromatographie unter Verwendung von Polystyrol als Standard bestimmbares Molekulargewicht (Gewichtsmittel) von 1.500 bis 75.000, vorzugsweise 2.000 bis 60.000 und besonders bevorzugt 3.000 bis 40.000, auf. Es handelt sich bei den Copolymerisaten um solche auf Basis von vorzugsweise einfach olefinisch ungesättigten Monomeren.

Zur Herstellung der Copolymerisate kommen drei Gruppen von olefinisch ungesättigten Monomeren zum Einsatz und zwar

a) Hydroxylgruppen enthaltende, olefinisch ungesättigte Monomere,
b) intramolekulare Säureanhydridgruppen enthaltende, olefinisch ungesättigte Monomere und
c) Hydroxylgruppen- und Säureanhydridgruppen-freie, nichtfunktionelle, olefinisch ungesättigte Monomere.

Die Monomeren a) werden im allgemeinen in einer Menge von 1 bis 50, vorzugsweise 5 bis 40 Gew.-Teilen, die Monomeren b) in einer Menge von 1 bis 30, vorzugsweise 5 bis 25 Gew.-Teilen, und die Monomeren c) in einer Menge von 20 bis 98, vorzugsweise 35 bis 90 Gew.-Teilen, eingesetzt, wobei außerdem zu berücksichtigen ist, daß die Anteile der einzelnen Monomeren in dem der Copolymerisation zuzuführenden Gemisch so bemessen werden, daß in den Copolymerisaten die obengenannten Mengen an chemisch eingebauten Hydroxyl- und Säureanhydridgruppen vorliegen. Der Gehalt der Copolymerisate an diesen Gruppierungen entspricht dem Gehalt des Monomerengemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um einfach olefinisch ungesättigte Alkohole, die vorzugsweise ein Molekulargewicht von 58 bis 500 und vorzugsweise aliphatisch gebundene Hydroxylgruppen aufweisen. Gut geeignet sind beispielsweise übliche Hydroxyalkylester der Acryl- und Methacrylsäure wie z.B. Hydroxyethyl(meth)acrylat, Hydroxypropyl(meth)acrylat, 4-Hydroxybutyl(meth)acrylat; Hydroxyalkylvinylether wie z.B. Hydroxyethylvinylether oder Hydroxybutylvinylether; Allylalkohol; Hydroxyderivate des (Meth)-acrylamids wie z.B. N-(3-Hydroxy-2,2-dimethylpropyl)(meth)acrylamid: Umsetzungsprodukte von Glycidyl-(meth)acrylat mit Monocarbonsäuren; Umsetzungsprodukte von (Meth)acrylsäure mit Monoepoxidverbindungen; sowie Umsetzungsprodukte der zuvor genannten OH-funktionellen, olefinisch ungesättigten Verbindungen mit $\epsilon$-Caprolacton oder Butyrolacton.

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Hydroxylgruppen- und Säureanhydridgruppen-freien, vorzugsweise einfach olefinisch ungesättigten Monomeren, wie sie auch bereits bei den Verfahren des obengenannten Standes der Technik als Monomere eingesetzt worden sind.

Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, N-Butylmethacrylat, Isobutylmethacrylat oder 2-Ethylhexylmethacrylat; Vinylaromaten wie beispielsweise Styrol, Vinyltoluol, $\alpha$-Methylstyrol, $\alpha$-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylether, N-Propylvinylether, Isopropylvinylether, N-Butylvinylether und Isobutylvinylether; Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren im allgemeinen bei Temperaturen von 60 bis 140 °C, vorzugsweise 80 bis 120 °C, in Gegenwart von Radikalbildnern und gegebenenfalls Molekulargewichtsreglern copolymerisiert.

Die Copolymerisation wird vorzugsweise in inerten Lösungsmitteln durchgeführt. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methyl-isoamylketon.

Die Copolymerisation kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt.

Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, jedoch sind auch Drücke bis 20 bar anwendbar. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1′-Azo-bis-1-cyclohexannitril und 2,2′-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, symmetrische Peroxydicarbonate, z.B. Diethyl-, Diisopropyl-, Dicyclohexyl- sowie Dibenzoylperoxydicarbonat; tert.-Butylperoxy-2-ethyl-hexanoat, tert.-Butylperbenzoat oder tert.-Butyl-N-(2-, 3- oder 4-chlorphenylperoxy)-carbonat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisationsreaktion anfallenden Lösungen der Copolymerisate können dann ohne weitere Aufarbeitung zur Herstellung der erfindungsgemäßen Bindemittelkombinationen eingesetzt werden.

Die Komponente B) besteht aus mindestens einer organischen Verbindung, die mindestens zwei Epoxidgruppen pro Molekül aufweist. Zu den bevorzugten derartigen Verbindungen gehören jene, die (im statistischen Mittel) 2 bis 100 Epoxidgruppen pro Molekül und ein Epoxidäquivalentgewicht von 43 bis 10.000, insbesondere 43 bis 8000, aufweisen. Typische Beispiele für geeigne oder bevorzugt geeignete Polyepoxide sind niedermolekulare, flüssige Diepoxide wie z.B. 1,2,3,4-Diepoxybutan, 1,2,5,6-Diepoxycyclooctan, 1,2,7,8-Diepoxyoctan, 3,4-Epoxycyclohexylmethyl-3′,4′-epoxycyclohexancarboxylat; Diglycidylester von Dicarbonsäuren wie z.B. Diglycidylterephthalat, Bernsteinsäurediglycidylester, Adipinsäurediglycidylester oder Hexahydrophthalsäurediglycidylester; Umsetzungsprodukte aus OH-funktionellen Epoxiden wie beispielsweise 2,3-Epoxy-1-propanol und Di-und/oder Polyisocyanaten, wie z.B. das Umsetzungsprodukt aus 3 Mol 2,3-Epoxy-1-propanol und 1 Mol eines Biuret-und/oder Isocyanuratpolyisocyanats auf Basis von Hexamethylendiisocyanat; Diglycidylether von aromatischen, aliphatischen oder cycloaliphatischen Di- oder Polyolen wie z.B. Diglycidylether von Bisphenol A-oder hydrierten Bisphenol A-Typen; epoxyfunktionelle Copolymerisate, erhältlich durch Verwendung von Glycidyl(meth)acrylat als epoxyfunktionelles Monomer.

Die Mengenverhältnisse der Einzelkomponenten A) und B) werden im allgemeinen so gewählt, daß auf jede Anhydridgruppe der Komponente A) insgesamt 0,2 bis 8, vorzugsweise 0,4 bis 4 und besonders bevorzugt 0,8 bis 1,5, Epoxidgruppen der Komponente B) entfallen.

Die erfindugnsgemäßen Bindemittelkombinationen stellen wertvolle Bindemittel für Beschichtungsmittel oder Dichtmassen dar. Aufgrund der Reaktionsfähigkeit von cyclischen Carbonsäureanhydridgruppen gegenüber Hydroxylgruppen bei Hitzeeinwirkung und der Reaktionsfreudigkeit der bei dieser Reaktion entstehenden Carbonsäuregruppen gegenüber Epoxidgruppen eignen sich die erfindungsgemäßen Bindemittelkombinationen ohne weitere Zusätze als Bindemittel für hitzehärtbare Beschichtungsmittel oder Dichtmassen, die beispielsweise innerhalb des Temperaturbereichs von 140 bis 200 °C innerhalb eines Zeitraums von ca. 10 bis 60 Minuten ausgehärtet werden können. Da in den Bindemittelkombinationen zunächst keine freien Carboxylgruppen vorliegen, weisen sie bei Raumtemperatur eine sehr gute Lagerstabilität auf. Sie können jedoch nach Zusatz von geeigneten Katalysatoren auch als Bindemittel für bei Raumtemperatur aushärtende Beschichtungsmittel und Dichtmassen Verwendung finden.

Hierzu bedarf es einer Katalysatorkomponente C), die die Reaktionsfähigkeit der Säureanhydridgruppen gegenüber den Hydroxylgruppen soweit steigert, daß bereits bei niedrigen Temperaturen, wie z.B. Raumtemperatur, eine Vernetzungsreaktion einsetzt. Solche Katalysatoren sind beispielsweise organische Zinnverbindungen oder vorzugsweise tert.-Aminogruppen enthaltende Verbindungen. Es kann sich dabei um Verbindungen handeln, die entweder gegenüber Säureanhydrid- bzw. Epoxidgruppen inert sind oder aber zusätzlich zur tert.-Aminogruppe eine gegenüber Säureanhydrid- bzw. Epoxidgruppen reaktionsfähige Gruppe (Hydroxylgruppe, primäre oder sekundäre Aminogruppe) aufweisen. Im zweiten Falle wird die Katalysatorkomponente C) in die Bindemittelkomponenten A) und/oder B) chemisch eingebaut durch Reaktion ihrer reaktionsfähigen Gruppe mit Säureanhydrid- und/oder Epoxidgruppen unter Ausbildung von Halbester-, Halbamid-bzw. sekundären oder tertiären Aminogruppierungen, gegebenenfalls verbunden mit der Ausbildung einer zusätzlichen Hydroxylgruppe (aus der Epoxidgruppe).

Als Katalysatoren geeignete Verbindungen C) sind beispielsweise tert.-Amine des Molekulargewichtsbereichs 73 bis 300 wie Ethyldimethylamin Diethylmethylamin, Triethylamin, Ethyldiisopropylamin, Tributylamin, 1-Methylpyrrolidin, 1-Methylpiperidin, 1,4-Dimethylpiperazin, 1,4-Diazabicyclo(2,2,2)octan oder 1,8-Diazabicyclo(5,4,0)-undec-7-en,N,N-Dimethylethanolamin, N,N-Diethylpropanolamin, N,N-Dibutylethanolamin, 1-Amino-3-(diethylamino)-propan oder 1-Amino-2-(diethylamino)-ethan. Es können auch beliebige Gemische der beispielhaft genannten tert.-Amine als Komponente C) eingesetzt werden.

Weiterhin ist es auch möglich, organische Verbindungen mit mindestens einer tert.-Aminogruppe einzusetzen, die ein Molekulargewicht von mehr als 300 besitzen. Solche Substanzen können z.B. Umsetzungsprodukte von olefinisch ungesättigten (Meth)acrylatgruppen aufweisenden Verbindungen mit sekundären Aminen sein, z.B. Umsetzungsprodukte aus 1 Mol Trimethylolpropantriacrylat und 3 Mol Di-n-butylamin.

Aber auch Umsetzungsprodukte von Polyisocyanaten mit N,N-Dialkylalkanolamin, wie z.B. das Umsetzungsprodukt aus 1 Mol biuretisiertem Polyisocyanat auf Basis von Hexamethylendiisocyanat und 3 Mol N,N-Dimethylethanolamin, sind geeignet.

Verbindungen, die neben einer tertiären Aminogruppe noch eine Hydroxylgruppe aufweisen, können beispielsweise auch hergestellt werden durch Reaktion von Verbindungen, die eine Epoxidgruppe enthalten, mit sekundären Aminen; z.B. das Umsetzungsprodukt aus Ethylhexylglycidylether und Di-n-butylamin.

Die die erfindungsgemäßen Bindemittelkombinationen als Bindemittel enthaltenden Beschichtungsmittel oder Dichtmassen können auch andere Katalysatoren wie organische. Zinnverbindungen wie z.B. Zinn(II)-octoat oder Dibutylzinn-dilaurat oder auch noch weitere Hilfs- und Zusatzmittel D) wie beispielsweise Lösungs- bzw. Verdünnungsmittel, Verlaufshilfsmittel, Antioxidantien, UV-Absorber oder Pigmente enthalten.

Die Herstellung der Beschichtungsmittel oder Dichtmassen erfolgt dergestalt, daß man je nach Anwendungszweck entweder die Ausgangskomponenten A), B), C) und gegebenenfalls D) miteinander vermischt oder nur die Ausgangskomponenten A), B) und gegebenenfalls D) wie nachfolgend beschrieben zur Anwendung bringt. Im Falle der Mitverwendung von Lösungs- bzw. Verdünnungsmittel als Komponente D) können diese bereits der Komponente A), B) und/oder gegebenenfalls C) zugegeben werden. Insbesondere ist eine Ausführungsform denkbar, derzufolge die Lösungs- bzw. Verdünnungsmittel auch schon während der Herstellung der Komponenten A) und B) zugegeben sind, wie dies z.B. bei der Herstellung der Copolymerisate beschrieben worden ist.

Lösungs- bzw. Verdünnungsmittel werden im allgemeinen in solchen Mengen mitverwendet, die zur Einstellung von geeigneten Verarbeitungsviskositäten erforderlich sind. Der Festgehalt, der der erfindungsgemäßen Verwendung zuzuführenden erfindungsgemäßen Kompositionen liegt im allgemeinen zwischen 20 und 80 Gew.-%. Durch Verwendung geeigneter niedermolekularer Copolymerisate ist es jedoch prinzipiell auch möglich, den Lösungs- bzw. Verdünnungsmittelgehalt noch weiter zu reduzieren, insbesondere im Falle der Herstellung von Dichtmassen unter Verwendung der erfindungsgemäßen Bindemittelkombinationen.

Die erfindungsgemäßen Bindemittelkombinationen eignen sich auch gut zur Formulierung von sogenannten "High-Solid-Beschichtungsmitteln",weil man durch Verwendung von niedrigviskosen Polyacrylatkomponenten A) und als quasi Reaktivverdünner wirkenden besonders niedrigviskosen Diepoxiden B) hohe Verarbeitungsfestkörper erzielen kann.

Die Mengenverhältnisse der Hydroxyl- und Anhydridgruppen der Komponente A) und der Epoxidgruppen der Komponente B) werden im allgemeinen so gewählt, daß auf jede cyclische Carbonsäureanhydridgruppe sowohl 0,2 bis 8, vorzugsweise 0,4 bis 4 und besonders bevorzugt 0,8 bis 1,5 Hydroxylgruppen als auch 0,2 bis 8, vorzugsweise 0,4 bis 4 und besonders bevorzugt 0,8 bis 1,5 Epoxidgruppen entfallen.

Im allgemeinen wird man einen Überschuß an Carbonsäureanhydridgruppen wählen, wenn bei Zweikomponentenformulierungen die Komponente C) neben einer tertiären Aminogruppe eine gegenüber Anhydridgruppen reaktiven Gruppe (Hydroxyl-, primäre oder sekundäre Aminogruppe) aufweist. Da primäre oder sekundäre Aminogruppen auch gegenüber Epoxidgruppen bei Raumtemperatur reaktiv sind, ist es empfehlenswert, in diesem Fall auch einen leichten Überschuß an Epoxidgruppen zu wählen.

Die erfindungsgemäßen Bindemittelkombinationen können direkt, ohne weitere Zusätze, zur Herstellung von klaren Überzügen verwendet werden. In der Regel werden jedoch die bereits obengenannten, in der Lackindustrie üblichen Hilfs- und Zusatzstoffe D) zugesetzt. Die auf diese Weise erhaltenen, gebrauchsfertigen Systeme können als Beschichtungs- oder Dichtmassen nach bekannten Methoden wie Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe und Papier aufgetragen werden.

In den nachfolgenden Beispielen beziehen sich alle Angaben in Prozenten und Teilen, falls nicht anders vermerkt, auf das Gewicht.

Beispiele

I Allgemeine Herstellungsvorschrift für die Hydroxyl-und Anhydridgruppen enthaltenden Copolymerisate $A_1$ bis $A_4$

In einem 3-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und die Zusammensetzungen der Teile I bis III sind in Tabelle I, zusammen mit den Kenndaten der erhaltenen Copolymerisate, aufgeführt.

Tabelle I (Mengenangaben in g)

| Copolymerisate | $A_1$ | $A_2$ | $A_3$ | $A_4$ |
|---|---|---|---|---|
| **T e i l I** | | | | |
| Butylacetat | 680 | 680 | 680 | 480 |
| **T e i l I I** | | | | |
| Styrol | 232 | 290 | 232 | 270 |
| Butylacrylat | 310 | 232 | | 526 |
| Methylmethacrylat | 348 | 406 | 186 | 270 |
| Butylmethacrylat | | | 464 | |
| Hydroxyethylmethacrylat | 152 | | 138 | |
| Hydroxypropylmethacrylat | | 138 | | 148 |
| Maleinsäureanhydrid | 116 | 92 | 138 | 134 |
| **T e i l I I I** | | | | |
| tert.-Butylperoxy-2-ethylhexanoat (70%ig) | 88 | 88 | 88 | 102 |
| Butylacetat | 74 | 74 | 74 | 70 |
| Polymerisationstemperatur (°C) | 120 | 120 | 120 | 125 |
| Festgehalt (%) | 59,8 | 60,0 | 60,7 | 70,7 |
| Viskosität (23°C, mPa.s) | 4950 | 3630 | 14166 | 35577 |
| Molverhältnis Anhydrid-/Hydroxylgruppen ca. | 1 : 1 | 1 : 1 | 1,4 : 1 | 1,4 : 1 |

II Herstellung der erfindungsgemäßen Beschichtungsmittel

a) Filmhärtung unter Einbrennbedingungen

Die Copolymerisate $A_1$ bis $A_4$ werden mit einem Polyepoxid gemischt und gegebenenfalls durch Zugabe eines organischen Lösungs- bzw. Verdünnungsmittels auf eine verarbeitungsfähige Viskosität eingestellt. Die Filme werden mit einem Filmzieher auf Prüfbleche aufgezogen, wobei die Naßfilmstärke 150 µm beträgt. Nach 5 Minuten Ablüften bei Raumtemperatur werden die beschichteten Prüfbleche 30 Minuten bei 150 °C gelagert. Danach werden sie auf Raumtemperatur abgekühlt. Man erhält auf diese Weise klare, farblose, vernetzte Lackfilme mit guten optischen und mechanischen Werten.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Lackfilm ohne sichtbare Veränderung bleibt. Mehr als 200 Doppelhübe pro Film wurden nicht durchgeführt.

In der folgenden Tabelle II werden die Zusammensetzungen der Bindemittelkombinationen und die Lösungsmittelfestigkeit als Grad der Vernetzung aufgeführt.

Als Polyepoxide werden folgende Verbindungen verwendet:

Polyepoxid I:

Handelsübliches, cycloaliphatisches Diepoxid ("Diepoxid 126" der Degussa AG) mit einem Epoxidäquivalentgewicht von ca. 138.

Polyepoxid II:

Technisches Polyepoxid auf Basis von Hexahydrophthalsäureanhydrid und Epichlorhydrin mit einem Epoxidäquivalentgewicht von ca. 180.

Tabelle II

| Verwendungsbeispiel | 1 | 2 | 3 | 4 |
|---|---|---|---|---|
| Copolymerisat | 40,0 g $A_1$ | 40,0 g $A_1$ | 40,0 g $A_2$ | 40,0 g $A_2$ |
| Polyepoxid I | 3,0 g | | 2,4 g | |
| Polyepoxid II | | 4,2 g | | 3,4 g |
| Butylacetat | 10,0 g | 10,0 g | 10,0 g | 10,0 g |
| MIBK-Wischtest: | | | | |
| Anzahl der Doppelhübe | 200 | 150 | 160 | 100 |

Tabelle II

| Verwendungsbeispiel | 5 | 6 | 7 | 8 |
|---|---|---|---|---|
| Copolymerisat | 40,0 g $A_3$ | 40,0 g $A_3$ | 40,0 g $A_4$ | 40,0 g $A_4$ |
| Polyepoxid I | 3,6 g | | 3,4 g | |
| Polyepoxid II | | 5,0 g | | 5,0 g |
| Butylacetat | 10,0 g | 10,0 g | 20,0 g | 20,0 g |
| MIBK-Wischtest: | | | | |
| Anzahl der Doppelhübe | 200 | 140 | 130 | 80 |

b) Filmhärtung bei Raumtemperatur

Die Copolymerisate $A_1$ bis $A_4$ werden mit einem Polyepoxid und einem tertiären Amin bei Raumtemperatur vermischt und gegebenenfalls durch Zugabe eines organischen Lösungs- bzw. Verdünnungsmittels

auf eine verarbeitungsfähige Viskosität eingestellt. Die Filme werden mit einem Filmzieher auf Prüfbleche aufgezogen, wobei die Naßfilmstärke 150 µm beträgt. Die so bei Raumtemperatur aufgezogenen Filme waren alle spätestens nach 60 Minuten klebfrei durchgetrocknet. Nach Alterung, d.h. 24 Stunden Trocknung bei Raumtemepratur, erhält man klare, farblose, vernetzte Filme mit guten optischen und mechanischen Werten.

Die angesetzten Lackmischungen weisen durchweg eine Standzeit von mehreren Stunden auf. Die Lösungsmittelfestigkeit wird wie zuvor beschrieben ermittelt.

In der folgenden Tabelle III werden die Zusammensetzungen der Bindemittelkombinationen und die Lösungsmittelfestigkeit als Grad der Vernetzung aufgeführt.

Tabelle III

| Verwendungsbeispiel | 9 | 10 | 11 | 12 |
|---|---|---|---|---|
| Copolymerisat | 40,0 g $A_1$ | 40,0 g $A_1$ | 40,0 g $A_2$ | 40,0 g $A_2$ |
| Polyepoxid I | 3,0 g | | 2,4 g | |
| Polyepoxid II | | 4,2 g | | 3,4 g |
| N,N-Dimethylethanolamin | 0,1 g | 0,1 g | | |
| Triethylamin | | | 0,1 g | 0,1 g |
| Butylacetat | 10,0 g | 10,0 g | 10,0 g | 10,0 g |
| Standzeit | > 8 h | > 8 h | > 8 h | > 8 h |
| MIBK-Wischtest: | | | | |
| Anzahl der Doppelhübe | 140 | 160 | 80 | 70 |

Tabelle III

| Verwendungsbeispiel | 13 | 14 | 15 | 16 |
|---|---|---|---|---|
| Copolymerisat | 40,0 g $A_3$ | 40,0 g $A_3$ | 40,0 g $A_4$ | 40,0 g $A_4$ |
| Polyepoxid I | 3,6 g | | 3,4 g | |
| Polyepoxid II | | 5,0 g | | 5,0 g |
| N,N-Dimethylethanolamin | 0,1 g | 0,1 g | 0,1 g | 0,1 g |
| Triethylamin | | | | |
| Butylacetat | 10,0 g | 10,0 g | 20,0 g | 20,0 g |
| Standzeit | > 8 h | > 8 h | > 8 h | > 8 h |
| MIBK-Wischtest: | | | | |
| Anzahl der Doppelhübe | 130 | 150 | 80 | 110 |

## Patentansprüche

**1.** Bindemittelkombinationen enthaltend

A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches sowohl

(i) 0,2 bis 6,0 Gew.-% an freien Hydroxylgruppen als auch

(ii) 1 bis 30 Gew.-% an Carbonsäureanhydridgruppen (berechnet als $C_4H_2O_3$)

chemisch gebunden enthält, und

B) 1 bis 70 Gew.-Teile einer Epoxid-Komponente, bestehend aus mindestens einem organischen Polyepoxid mit mindestens zwei Epoxidgruppen pro Molekül

mit der Maßgabe, daß auf jede Anhydridgruppe der Komponente A) 0,2 bis 8 Epoxidgruppen der Komponente B) entfallen.

**2.** Bindemittelkombinationen gemäß Anspruch 1, dadurch gekennzeichnet, daß die Copolymerisate der Komponente A) durch radikalisch initiierte Copolymerisation erhaltene Copolymerisate aus

a) 1 bis 30 Gew.-Teilen copolymerisierbaren, Anhydridgruppen enthaltenden Monomeren,

b) 1 bis 50 Gew.-Teilen copolymerisierbaren, Hydroxylgruppen enthaltenden Monomeren, sowie

c) 20 bis 98 Gew.-Teilen copolymerisierbaren Hydroxylgruppen- und Anhydridgruppen-freien, nichtfunktionellen Monomeren

darstellen.

**3.** Bindemittelkombinationen gemäß Anspruch 1 oder 2, dadurch gekennzeichnet, daß in den Copolymerisaten der Komponente A) als anhydridfunktionelle Monomere Maleinsäureanhydrid und/oder Itaconsäureanhydrid in copolymerisierter Form vorliegen.

**4.** Bindemittelkombinationen gemäß Anspruch 1 bis 3, dadurch gekennzeichnet, daß in den Copolymerisaten der Komponente A) als einpolymerisierte, hydroxyfunktionelle Monomere Hydroxyalkylester der Acryl-und/oder Methacrylsäure vorliegen.

**5.** Verwendung der Bindemittelkombinationen gemäß Anspruch 1 bis 4 als Bindemittel für hitzehärtbare Beschichtungsmittel oder Dichtmassen.

**6.** Verwendung der Bindemittelkombinationen gemäß Anspruch 1 bis 4 in Kombination mit Katalysatoren, als Bindemittel für bei Raumtemperatur härtbare Beschichtungsmittel oder Dichtmassen.

## Claims

**1.** Binder combinations containing

(A) from 30 to 99 parts by weight of a copolymer component consisting of at least one copolymer of olefinically unsaturated compounds having a weight average molecular weight of from 1500 to 75,000 which contains, chemically bound, both

(i) from 0.2 to 6.0% by weight of free hydroxyl groups and

(ii) from 1 to 30% by weight of carboxylic acid anhydride groups (calculated as $C_4H_2O_3$) and

B) from 1 to 70 parts by weight of an epoxide component consisting of at least one organic polyepoxide having at least two epoxide groups per molecule

with the proviso that from 0.2 to 8 epoxide groups of component B) are present for each anhydride group of component A).

**2.** Binder combinations according to Claim 1, characterised in that the copolymers of component A) are copolymers obtained by radical initiated copolymerisation of

a) from 1 to 30 parts by weight of copolymerisable monomers containing anhydride groups,

b) from 1 to 50 parts by weight of copolymerisable monomers containing hydroxyl groups and

c) from 20 to 98 parts by weight of copolymerisable unfunctional monomers which are free from hydroxyl groups and anhydride groups.

**3.** Binder combinations according to Claim 1 or Claim 2, characterised in that the copolymers of component A) contain maleic acid anhydride and/or itaconic acid anhydride as anhydride functional monomers in copolymerised form.

4. Binder combinations according to Claims 1 to 3, characterised in that the copolymers of component A) contain hydroxyalkylesters of acrylic and/or methacrylic acid as hydroxyfunctional monomers incorporated by polymerisation.

5. Use of the binder combinations according to Claims 1 to 4 as binders for heat hardenable coating compounds or sealing compounds.

6. Use of the binder combinations according to Claims 1 to 4 in combination with catalysts as binders for coating compounds or sealing compounds which can be hardened at room temperature.

## Revendications

**1.** Combinaisons de liants contenant

A) 30 à 99 parties en poids d'un composant copolymère constitué d'au moins un copolymère de composés à non-saturation oléfinique ayant un poids moléculaire, déterminé comme moyenne en poids, de 1500 à 75 000, qui contient, liés chimiquement

(i) 0,2 à 6,0 % en poids de groupes hydroxyle libres ainsi que

(ii) 1 à 30 % en poids de groupes anhydride d'acide carboxylique (exprimé en $C_4H_2O_3$), et

B) 1 à 70 parties en poids d'un composant époxyde constitué d'au moins un polyépoxyde organique portant au moins deux groupes époxyde par molécule

sous réserve qu'il y ait 0,2 à 8 groupes époxyde du composant B) pour chaque groupe anhydride du composant A).

**2.** Combinaisons de liants suivant la revendication 1, caractérisées en ce que les copolymères du composant A) sont représentés par des copolymères, obtenus par copolymérisation déclenchée par des radicaux,

a) de 1 à 30 parties en poids de monomères copolymérisables contenant des groupes anhydride,

b) de 1 à 50 parties en poids de monomères copolymérisables contenant des groupes hydroxyle ainsi que

c) de 20 à 98 parties en poids de monomères copolymérisables non fonctionnels dépourvus de groupes hydroxyle et de groupes anhydride.

**2.** Combinaisons de liants suivant la revendication 1 ou 2, caractérisées en ce que de l'anhydride d'acide maléique et/ou de l'anhydride d'acide itaconique sont présents sous forme copolymérisée comme monomères à fonction anhydride dans les copolymères du composant A).

**4.** Combinaisons de liants suivant les revendications 1 à 3, caractérisées en ce que des esters d'hydroxyalkyle d'acide acrylique et/ou d'acide méthacrylique sont présents comme monomères à fonction hydroxy incorporés par polymérisation dans les copolymères du composant A).

**5.** Utilisation des combinaisons de liants suivant les revendications 1 à 4 comme liants pour compositions de revêtement ou compositions de calfeutrage durcissables à la chaleur.

**6.** Utilisation des combinaisons de liants suivant la revendication 1 à 4 en association avec des catalyseurs, comme liants pour compositions de revêtement ou compositions de calfeutrage durcissables à la température ambiante.